# EUROPEAN PATENT SPECIFICATION

(11) **EP 3 407 701 B1**
(45) Date of publication and mention of the grant of the patent: **04.12.2019**
(21) Application number: 16702380.3
(22) Date of filing: 27.01.2016
(51) Int. Cl.: A01G 3/025

(54) **PRUNING TOOL, IN PARTICULAR A BRANCH PRUNER, A LOPPER OR A SECATEUR**
SCHNEIDWERKZEUG, INSBESONDERE EINE ASTSCHERE, EIN BAUMBESCHNEIDER ODER EINE REBSCHERE
OUTIL D'ÉLAGAGE, EN PARTICULIER UN ÉLAGUEUR DE BRANCHE, UN ÉBRANCHEUR OU UN SÉCATEUR

(43) Date of publication of application: 05.12.2018
(73) Proprietor: Husqvarna AB, 561 82 Huskvarna (SE)
(72) Inventor: KOHL, Peter, 89267 Illertissen (DE)
(74) Representative: Finkele, Rolf
(86) International application number: PCT/EP2016/051667
(87) International publication number: WO 2017/129235

(56) References cited:
- EP-A1- 2 022 320
- CN-U- 203 233 743
- US-A1- 2011 219 629

## Description

The invention relates to a pruning tool, in particular a branch pruner, a lopper or a secateur, with an elongated handle for pruning tree branches, twigs and shrubs.

Pruning tools, such as branch pruners, loppers and secateurs comprising an elongated handle offer easier cutting of branches or twigs, which are difficult to access as they may be high-lying. Pruning tools known from the prior art usually have a movable working device that is attached to a front end of the elongated handle and is configured to perform a cutting action.

The movement of the working device is done by means of a pulling member, for example a pull strap that is attached to the working device and that transmits a pulling force that is caused by a movement of the actuation handle to the working device in order to perform a cutting action.

If branches or twigs with varying diametrical sizes should be severed, it might be necessary to adjust the pulling force that is caused by movement of the actuation handle and is applied on the pulling member. Cutting thicker branches usually requires a greater pulling force than cutting thinner branches.

Known pruning tools comprise different pulley block systems to transmit the pulling force to the working device. In order to achieve high cutting power with less effort for the operator, often several pulleys and long pulling members are needed.

Thereby, the pulling way, thus the distance the actuation handle has to be shifted, is independent from the diametrical size of the branches, so that an operator has to move the actuation handle along the complete available pulling way.

A pruning tool is described with US 2011/219629 A1 comprising an elongated handle, whereby a movable working device formed by fixed and movable blades is arranged at a first end portion of the handle. Further the pruning tool comprises an actuation handle being arranged on the elongated handle and being movable along the elongated handle between a first position and a second position. A stop element is fixed on the handle in order to limit the movement of the actuation handle in the direction of the working device. The actuation handle is coupled to the working device by means of a pulling member in order to transmit actuating forces on the working device, whereby in order to perform a cutting action a first end of the pulling member is detachable fixable to the actuation handle.

Another pruning tool is described with CN 203 233 743 U and illustrates an pulling member able to perform a first cutting action via a first actuation handle and a second cutting action via a second actuation handle.

EP 2 022 320 A1 illustrates another pruning tool for example.

It is an object of the invention to provide a pruning tool, in particular a branch pruner, a lopper or a secateur that allows adjusting the pulling way respectively the pulling force in an easy manner.

The object is achieved by a pruning tool, in particular a branch pruner, a lopper or a secateur, with the technical features according to claim 1. The pruning tool comprises an elongated handle and a movable working device that is arranged at a first end portion of the elongated handle for performing a cutting action. The pruning tool further comprises an actuation handle that is arranged on the elongated handle and is movable along said handle between a first position and a second position. A stop element is fixed on the handle in a specific position in order to limit the movement of the actuation handle in the direction of the working device. The actuation handle is coupled to the working device by means of a pulling member respectively by pulling means in order to transmit actuating forces on the working device and therefore to perform a cutting action, once the actuation handle is moved along the handle. In order to perform a first cutting action, a first end of the pulling member is detachable respectively removable fixable to the stop element in order to adjust the pulling way respectively to adjust the pulling force required for the first cutting action. In order to perform a second cutting action, the first end of the pulling member is detachable respectively removable fixable to the actuation handle in order to adjust the pulling way respectively to adjust the pulling force required for the second cutting action.

The actuation handle is coupled to the working device in such a way that a movement of the actuation handle away from the stop element and away from the working device results in a movement of the pulling member respectively in transmitting a pulling force via the pulling member to the working device, in order to actuate the working device. The working device of the pruning tool is for example a cutting assembly having at least one movable blade and a stationary blade wherein the movable blade is pivotally connected to the stationary blade. Furthermore, the working device respectively the movable blade is coupled to a drive mechanism, that for example comprises a pull cord, whereby the drive mechanism is operatively connected to the pulling member in order to actuate the working device during a cutting action. A second end of the pulling member is fixed for example within the elongated handle, so that it remains at a certain position during the cutting action. The pulling member respectively the pulling force is transmitted to the drive mechanism respectively to the working device by means of a pulley block system. Once the actuation handle is moved along the elongated handle from its first into its second position, the cutting action is performed.

In order to perform the first cutting action, the first end of the pulling member is detachable fixed to the stop element and guided through the actuation handle via a pulley. In other words: The pulling member is coupled to the actuation handle by means of a reverse pulley system and is carried along the elongated handle by a movement of the actuation handle. As the first end of the pulling member itself is fixed to the stop element, the pulling way between the working device and the actuation handle that is required to actuate the working device is halved due to the reverse pulley system. When the same actuating force is applied to the pulling member, the cutting force applied to the working device is halved, which is enough to cut smaller and thinner branches. In other words: In order to apply the same cutting force to the working device respectively to the cutting head, double pulling or actuating force has to be applied during the first cutting action, thus with halved pulling way, in comparison to the second cutting action, thus with maximum pulling way.

In order to perform the second cutting action, the first end of the pulling member is detachable fixed to the actuation handle to adjust a longer pulling way. Also during the second cutting action, the pulling member is carried along the elongated handle by a movement of the actuation handle, whereby the pulling member is however directly coupled to the actuation handle. Thereby a maximal pulling way and a maximum possible cutting force being applied to the working device is adjusted, thus an operator applies a greater cutting force to cut thicker branches. In other words: In order to perform the second cutting action, the actuation handle has to be moved further away from the working device than during the first cutting action. Thereby the reverse pulley system is cancelled, that means a pulley that is arranged within the actuation handle and that guides the pulling member does not rotate during the second cutting action.

A pruning tool according to the invention allows an easy adjustment of the pulling way respectively the required pulling force so that severing branches of varying diametrical sizes is possible without great effort. Therefore different thick branches can but cut with the same pruning tool as the pulling member is detachable fixed either to the stop element or to the actuation handle.

The pulling member is for example a pull strap or a wire rope. The stop element is for example formed as a clamp or bracket that is held by means of a screw around the elongated handle.

In particular, the actuation handle is a movable sleeve that is configured to move along and slide over the elongated handle. The pulling member is guided within the actuation handle respectively within the movable sleeve and is therefore protected against damages. Furthermore, an actuation handle being formed as a movable sleeve allows low friction movement along the elongated handle.

In order to allow a comfortable working with the pruning tool, it comprises in particular a hand grip that is arranged at a second end portion of the handle, thus at the opposite end of the working device. The hand grip preferably extends nearly orthogonal to the handle so that an operator can grip it in such a way that the weight of the pruning tool is supported. This is in particular advantageous for cutting branches in increased height. Once a second end of the pulling member is attached to the hand grip, the working device can also be operated by pulling out the hand grip which is detachable fixed to the elongated handle from the latter respectively by moving the hand grip away from the elongated handle. Therefore even branches in increased height can be reached without any problems.

Deflection of the pulling member within the actuation handle can for example be realized by a pin that protrudes from an inner wall of the actuation handle. But in a preferred embodiment, the pulling member is deflected respectively redirected by at least one deflection pulley that is arranged within the actuation handle in order to allow movement of the pulling member within the actuation handle as smoothly as possible during the first cutting action. In order to stabilize the movement and guiding of the pulling member within the actuation handle, preferably at least one guide pulley is further provided within the actuation handle, which pushes against the pulling member from above or from below. The deflection pulley as well as the guide pulley can generally be arranged at any position within the actuation handle.

According to a preferred embodiment, the first end of the pulling member is attached to a fastening element which is constructed in such a way that it can be detachable fixed to the stop element or the actuation handle, in order to accomplish the removable fixation of the first end of the pulling member in an easy and reliable manner.

In particular, the first end of the pulling member or the fastening element if available is detachable fixable to the stop element, in order to perform a first cutting action, or to the actuation handle, in order to perform a second cutting action, by forming a form-fit connection. The form-fit connection is effective in a direction away from the stop element respectively the working device, thus it is effective once the actuation handle is moved from the first position to the second position.

With regard to the manner as the form-fit connection is formed, different opportunities are possible, for example a pin that interacts with a recess being present in the stop element or the actuation handle or by knotting the pulling member. According to a first preferred embodiment, the fastening element is a loop or a hook that interacts with respectively engages in a projection being formed on an outer surface of the stop element in order to perform the first cutting process. In order to simplify connecting the loop or the hook and the projection, the loop or the hook is preferably mounted pivotally on the first end of the pulling member. Furthermore, it is advantageous if the projection has a recess into which the fastening element engages in order to secure itself against shifting during the cutting operation. The recess is present on the side of the projection which faces towards the working device and opposite to the actuation handle. The recess is furthermore integrally formed with the stop element. During the second cutting action, the fastening element, respectively the loop or the hook forms a form-fit connection with the actuation handle, for example due to a broadening or thickening being formed at a connection point between the first end of the pulling member and the actuation handle. Therefore a slipping of the pulling member through the actuation handle during the movement is prevented.

According to a further preferred embodiment, the fastening element is a sleeve that is slidable along the elongated handle, said sleeve being detachable fixable to the stop element in order to perform a first cutting action and being detachable fixable to the actuation handle in order to perform a second cutting action. In order to fix the fastening element detachable to the stop element, said stop element comprises a part being movable in a peripheral direction of the elongated handle which has a recess on its inner surface, whereby said recess interacts with a projection protruding from a peripheral surface of the fastening element in the manner of a bayonet catch. By rotating the movable part of the stop element, the form-fit connection is formed or loosened between the stop element and the actuation handle. During a first cutting process, the fastening element that supports the first end of the pulling member is therefore not moved away from the stop element.

In order to perform the second cutting action, the first end of the pulling member respectively the fastening element is attached to the actuation handle or held to the latter by means of a clamping connection, a plug connection or a form-fit connection. Therefore the fastening element respectively the first end of the pulling member is movable together with the actuation handle from its first to its second position.

In order to allow simplified pulling and gripping of the actuation handle for the operator, the actuation handle preferably comprises a first and a second section having different diameters and merging into each other in a rounded transition area. The first section has a larger diameter than the second section of the actuation handle. The at least one deflection pulley and/or the at least one guide pulley are arranged within the first section of the actuation handle. Therefore the first section provides a support for the deflection pulley and/or the guide pulley. For example, the first section is facing away from the working device and the stop element and the second section of the actuation handle that follows the first section is facing towards the working device respectively the stop element. Therefore pulling the actuation handle away from the working device and towards the hand grip is simplified. Furthermore the first section provides sufficient space inside to arrange the deflection pulley and/or the guide pulley.

In a further preferred embodiment, the actuation handle comprises a guiding channel through which the pulling member is at least partially guided within actuation handle. This has the advantage that the two parts of the pulling member that are guided within the actuation handle and move back and forth towards and away from the deflection pulley or another deflection element do not hinder and rub against each other during the movement of the actuation handle. Furthermore, slipping around and twisting of the pulling member is prevented. The guiding channel is in particular integrally formed with the actuation handle.

In order to increase the range of the pruning tool respectively the working device, the elongated handle may preferably comprise at least two handle portions being telescopically movable into each other. In this case the working device is arranged at a first end portion of a first handle portion, and the hand grip, if applicable, is arranged at a second end portion of a second handle portion.

Exemplary embodiments will now be described in connection with the annexed figures, in which
- Fig. 1: shows a pruning tool,
- Fig. 2: shows a section of a pruning tool, wherein the actuation handle is in a first position,
- Fig. 3: shows a section of a pruning tool, wherein the actuation handle is in a second position during a first cutting action,
- Fig. 4: shows a section of a pruning tool, whereby the actuation handle is in a second position during a second cutting action,
- Fig. 5A: shows a partial section cut of a section of the pruning tool according to a first embodiment, whereby the actuation handle is in a first position before performing a first cutting process,
- Fig. 5B: shows a partial section cut according to Fig. 5A, whereby the actuation handle is in a second position during a first cutting action,
- Fig. 5C: shows a partial section cut of a section of the pruning tool according to a first embodiment, whereby the actuation handle is in a first position before performing a second cutting action,
- Fig. 5D: shows a partial section cut according to Fig. 5C, whereby the actuation handle is in a second position during a second cutting action,
- Fig. 6A: shows a partial section cut of a section of the pruning tool according to a second embodiment, whereby the actuation handle is in a first position before performing a first cutting process,
- Fig. 6B: shows a partial section cut according to Fig. 6A, whereby the actuation handle is in a second position during a first cutting action,
- Fig. 6C: shows a partial section cut of a section of the pruning tool according to a second embodiment, whereby the actuation handle is in a first position before performing a second cutting action,
- Fig. 6D: shows a partial section cut according to Fig. 6C, whereby the actuation handle is in a second position during a second cutting action,
- Fig. 7A: shows a partial section cut of a section of the pruning tool according to a third embodiment, whereby the actuation handle is in a first position before performing a first cutting process,
- Fig. 7B: shows a partial section cut according to Fig. 7A, whereby the actuation handle is in a second position during a first cutting action,
- Fig. 7C: shows a partial section cut of a section of the pruning tool according to a third embodiment, whereby the actuation handle is in a first position before performing a second cutting action,
- Fig. 7D: shows a partial section cut according to Fig. 7C, whereby the actuation handle is in a second position during a second cutting action.

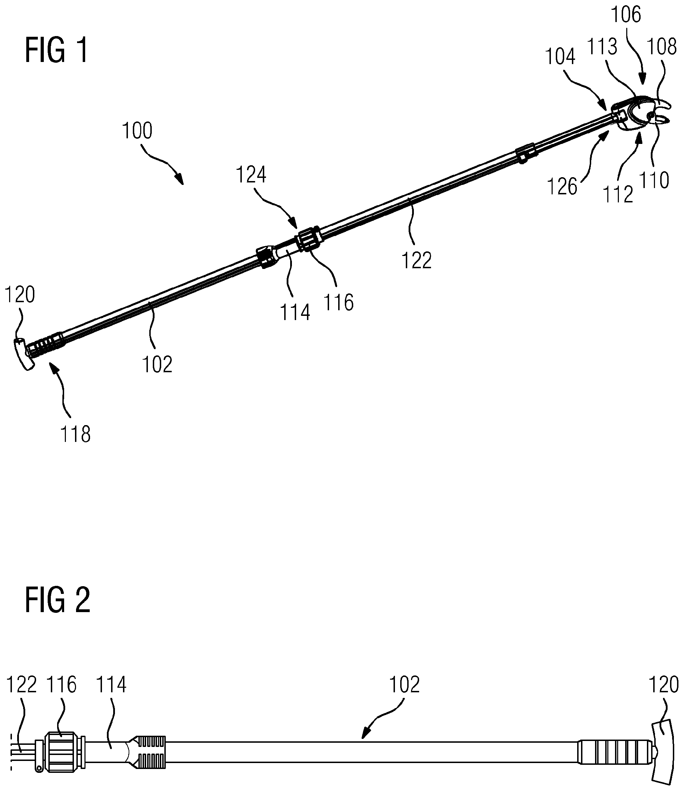

Fig. 1 shows a pruning tool 100 in a perspective view, in the present case a branch pruner for severing branches. The pruning tool 100 comprises an elongated handle 102. The elongated handle 102 may have a telescopic structure with one or more handle portions that are configured to be moved into each other. A movable working device 106 is arranged at a first, front end portion 104 of the elongated handle 102. The working device 106 is a cutting assembly having a stationary blade 108 and a movable blade 110. For performing a cutting process, the movable blade 110 is movable towards the stationary blade 108 for example by a pivoting arrangement 112 at which the movable blade 110 is pivotally mounted at a joint area 113.

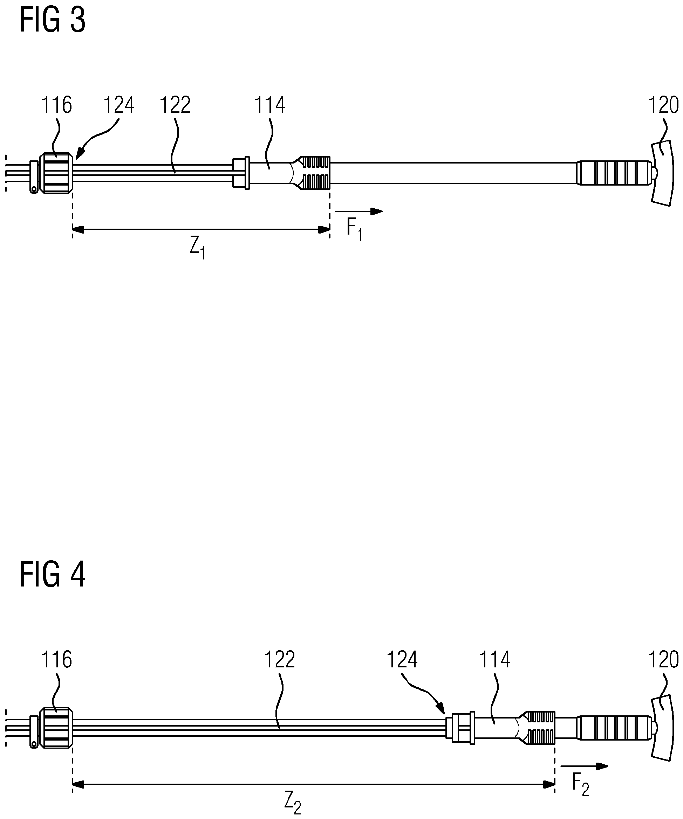

Furthermore the pruning tool 100 comprises an actuation handle 114 which is attached to the elongated handle 102 and is configured to be moved between a first position (Fig. 2) and a second position (Fig. 3) along the handle 102. A stop element 116 that is fixed to the handle 102 limits the movement of the actuation handle in the direction of the working device 106.

A movable hand grip 120, to which a second end of the pulling member 122 is attached, is provided at a second back end portion 118 of the handle 102. Therefore the working device 106 can also be actuated by pulling out the hand grip 120 away from the elongated handle 102. Therefore the range of the pruning tool 100 is significantly increased so that also branches in increased height can be cut in an easy way.

The actuation handle 114 is coupled to the working device 106 by a pulling member 122 in order to transmit actuating respectively pulling forces to the working device 106. The pulling member is formed as a pull strap that is guided along the handle 102 and below through the stop element 116 to the working device 106. In order to reduce the effort that is required to perform a cutting process, the pulling member 122 is formed as a pulley block system within the elongated handle 102. The first end 124 of the pulling member 122 is, depending on the cutting action that has to be performed, either detachable fixed to the stop element 116 or detachable fixed to the actuation handle 114. The pulling member 122 is operatively connected to the working device 106 by means of a drive mechanism 126. As described before, the second end of the pulling member 122 is attached to the hand grip 120.

According to Fig. 2, the actuation handle 114 is in a first position and thus in a starting position before a cutting action is performed. In order to perform a first cutting process, the actuation handle 114 is moved from this first position into a second position which is illustrated in Fig. 3. A first end 124 of the pulling member 122 is thereby detachable fixed to the stop element 116. The actuation handle 114 covers a pulling way Z₁ with an appropriate pulling force F₁ during the first cutting process, what is in particular advantageous for cutting thinner branches.

In order to perform a second cutting process, the actuation handle 114 is moved from this first position into a second position which is illustrated in Fig. 4. A first end 124 of the pulling member 122 is thereby detachable fixed to the actuation handle 114. The actuation handle 114 covers respectively is moved along a double pulling way Z₂ with a halved pulling force F₂ during the second cutting process in comparison with the pulling way Z₁ and the pulling force F₁ during the first cutting action, what is in particular advantageous for cutting thicker branches, as a greater cutting force can be transmitted to the working device 106.

To allow a smooth gliding of the actuation handle 114 during the cutting actions, the actuation handle 114 is designed as a movable sleeve that is able to slide along the elongated handle 102.

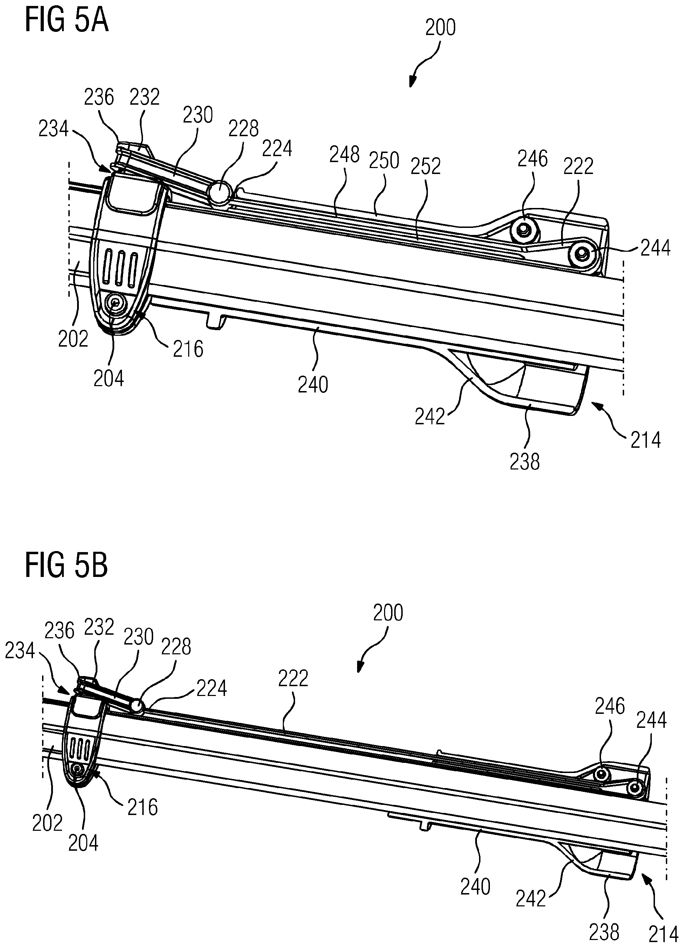

Fig. 5A to 5D show a section view of a part of a pruning tool 200 according to a first embodiment of the invention. The pruning tool 200 comprises an elongated handle 202 as well, a working device (not shown) is arranged a front end of the handle 202. A stop element 216 designed as a clamp is fixed to the handle 202 by means of a screw 204. As shown in Fig. 5A, the actuation handle 214 is positioned in a first position. The first end 224 of the pulling member 222 is fixed to a fastening element 230 by a joint 228. The joint 228 allows pivoting movement of the fastening element 230 in order to form a detachable fixation between the fastening element 230 and the stop element 216 in an easy manner.

The fastening element 230 is according to the first embodiment designed as a loop and connected to the stop element 216 by forming a form-fit connection, so that a subsequent first cutting action can be performed. The fastening element 230 interacts with a projection 232 that protrudes from the circumferential surface of the stop element 216. The recess 234 has a recess 234 respectively a deepening that is formed on a side of the recess 234 that faces away from the actuation handle 214. The fastening element 230 engages into said recess 234, so that a slipping out of the fastening element 230 from the recess 232 respectively the stop element 216 during the first cutting process is inhibited as a projection 236 that limits the recess 234 acts as an additional barrier.

The actuation handle 214 further has a first section 238 and a second section 240 that merge into each other in a rounded transition area 242. The first section 238 that is arranged on a side of the actuation handle 214 that faces towards the working device and the stop element 216 has a larger diameter than the second section 240 that faces away from the working device and the stop element 216. A deflection pulley 244 for deflecting the pulling member 222 is arranged within the first section 238, whereby the deflection pulley 244 functions as a reverse pulley block system. Furthermore a guide pulley 246 for guiding the pulling member 222 is arranged within said first section 238, whereby the guide pulley pushes from one side respectively from above against the pulling member 222 in order to realise a smaller form, thus a smaller diameter of the actuation handle 214.

The pulling member 222 is guided inside the actuation handle 214 within a guiding channel 248 that is integrally formed with the actuation handle 214. The guiding channel is formed by an outer wall 250 of the actuation handle 214 and an elongated projection 252 that protrudes from an inner surface of the actuation handle 214. The pulling member 222 that passes between the fastening element 230 respectively the joint 228 and the deflection pulley 244 is guided through said guiding channel 248.

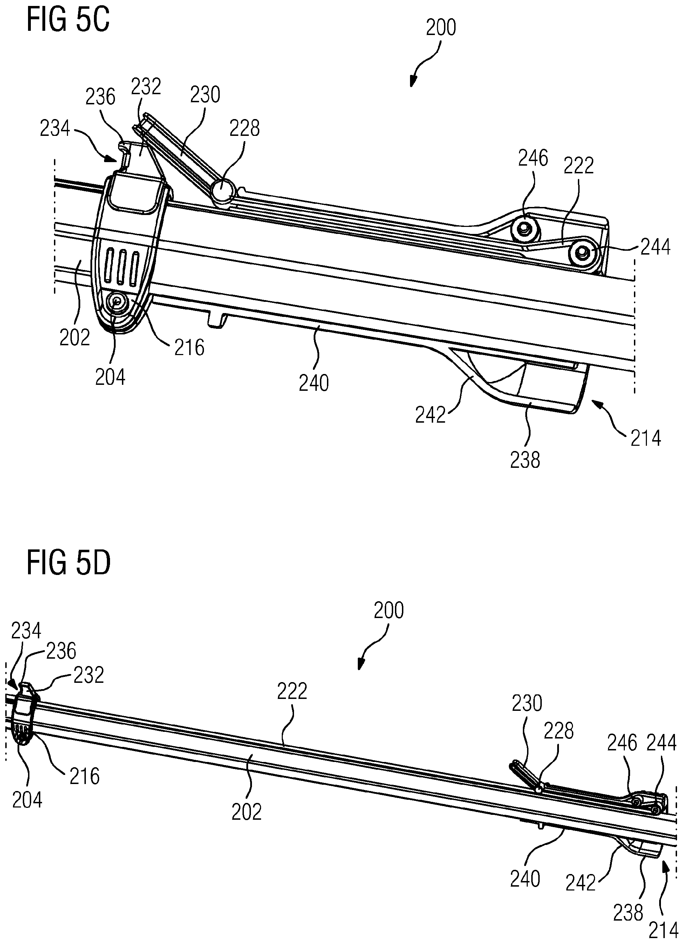

In order to perform the first cutting action, the actuation handle 214 is moved from the first position into a second position, which is shown in Fig. 5B. In order to perform a second cutting action, for which a greater cutting force is required, the fastening element 230 is separated from the stop element 216 (Fig. 5C). By a movement of the actuation handle 214, the fastening element 230 and therefore the first end 224 of the pulling member 222 is also carried along the handle 202 together with the actuation handle 214 into the second position away from the stop element 216 (Fig. 5D). As the fastening element 230 respectively the joint 28 is broadened compared with the guiding channel 248, the pulling member 222 respectively its first end 224 cannot be loosened from the actuation handle 214 due to a pulling force, thus cannot slip through the guiding channel 248 and the actuation handle 214. The first end 224 of the pulling member 222 respectively the fastening element 230 are therefore fixed to each other during the second cutting action by forming a form-fit connection.

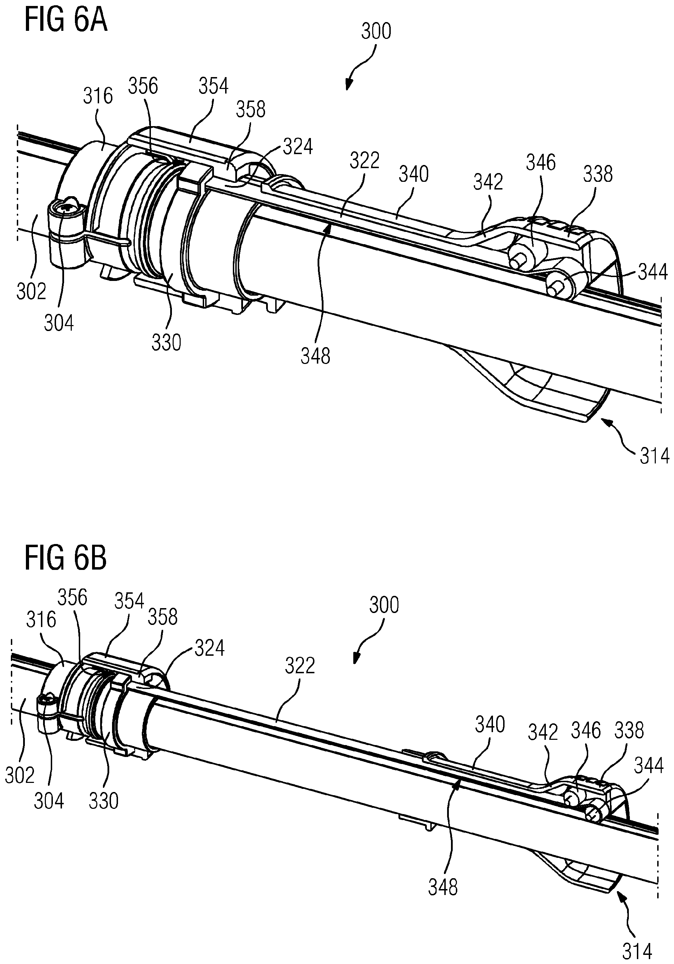

According to a second embodiment of a pruning tool 300, as shown in Fig. 6A to 6D, the fastening element 330 is designed as a slidable sleeve that is movable along the elongated handle 302. Even in this embodiment, the stop element 316 is fixed to the handle 302 by means of a screw 304. As shown in Fig. 6A, the actuation handle 314 is positioned in a first position. A first end 324 of the pulling member is attached to the fastening element 330. The actuation handle 314 comprises a first section 338 with a larger diameter and a second section 340 with a smaller diameter that merge into each other in a rounded transition area 342. According to the first embodiment, even in this second embodiment a deflection pulley 344 for deflecting the pulling member 322 and a guide pulley 346 for guiding the pulling member 222 are arranged within the first section 338 of the actuation handle and the pulling member 322 is at least partially guided through a guiding channel 348, so that reference is made to the aforementioned explanations.

In order to form a form-fit connection between the fastening element 330 and the stop element 316, said stop element 316 comprises a part 354 that is movable in a peripheral direction of the elongated handle and is designed as a sleeve. The inner surface of the movable part 354 is equipped with a recess 356 that interacts with a projection 358 that protrudes from an outer surface of the fastening element 330. In other words: The movable part 354 is designed as a bayonet sleeve. By rotating the movable part 354 in the peripheral direction, the fastening element 330 can be removable fixed to the stop element 316 in the manner of a bayonet catch.

In order to perform the first cutting action, the actuation handle 314 is movable from the first position into a second position, which is shown in Fig. 6B, while the fastening element 330 is fixed to the top element 316 by means of a bayonet 358. The actuation handle 314 and the fastening element 330 are kept together via the pulling force of the pulling member 322 respectively the pull strap . For performing a first cutting action, the pulling force can be overcome with less effort so that the actuation handle 314 can be moved away from the stop element 316 and the fastening element 330, while the fastening element 330 itself is fixed within the bayonet sleeve 354 by means of a form-fit connection to the stop element 316.

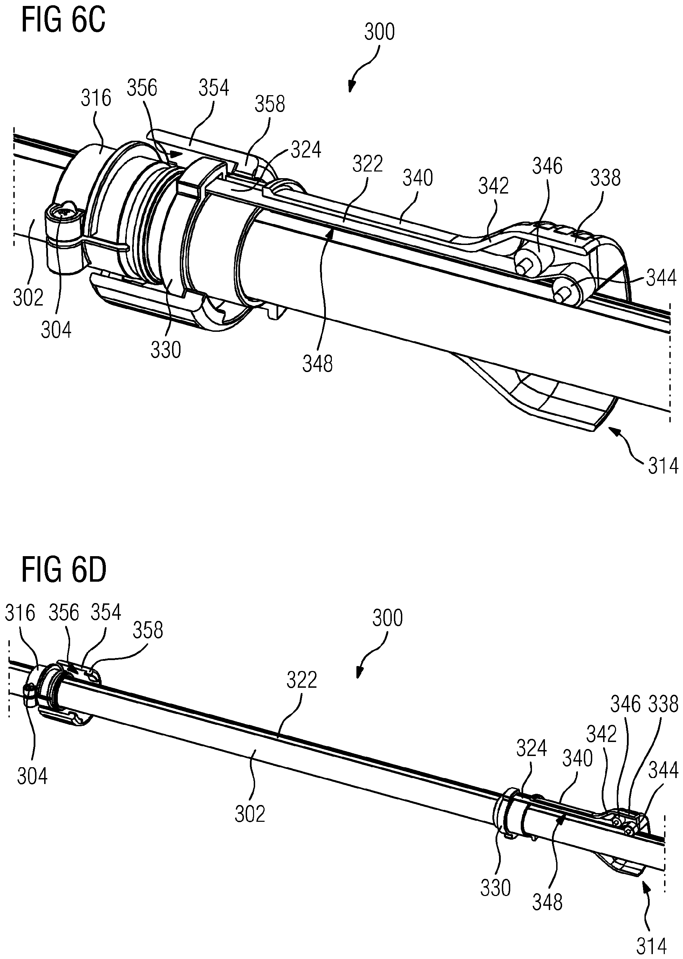

In order to perform the second cutting action whereby the form-fit connection between the fastening element 330, to which the first end 324 of the pulling member 322 is attached, and the stop element 316 is loosened (Fig. 6C), the actuation handle 314 is moved together with the fastening element 330 away from the stop element 316 into a second position (Fig. 6D), so that even the first end 324 of the pulling member 322 is moved away. The fastening element 330 which is now separated from the stop element 316, is pulled against a front end respectively against a front side of the actuation handle 314 and fits closely thereon during the second cutting action, in order to prevent the pulling member 322 from slipping through the actuation handle 314.

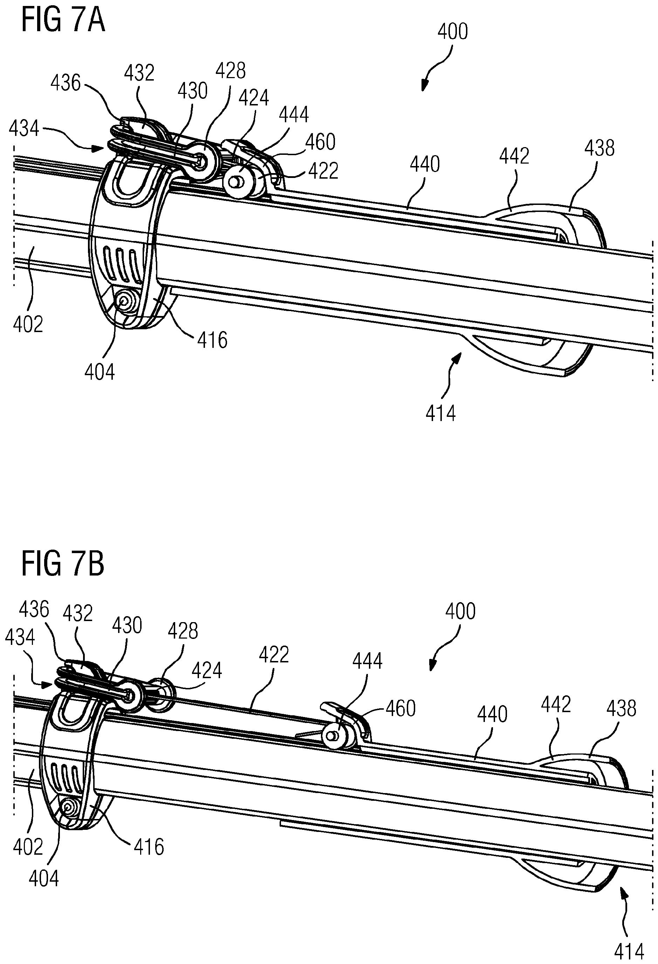

According to a third embodiment of the pruning tool 400, as illustrated in Fig. 7A to 7D, the fastening element 430 is even designed as a slidable sleeve, that can be moved along the elongated handle 402. A stop element 416 is fixed to the elongated handle 402 by a screw 404. As shown in Fig. 7A, the actuation handle 414 is arranged in a first position and the first end 424 of the pulling member 422 is fixed to the fastening element 430. The fastening element 430 is designed as a loop, which builds a form-fit connection with the stop element 416 by interacting with a projection 432 being present on an outer surface of the stop element 416. On a side which faces away from the actuation handle 414, the projection 432 is provided with a recess 434, with which the fastening element 430 engages in order to prevent slipping out of the latter during the first cutting action.

Contrary to the previously described embodiments, the deflection pulley 444 is arranged in a front, first section 460 of the actuation handle 414, which faces towards the stop element 416 and forms a space for inserting the deflection pulley 444. Therefore the pulling member 422 has not to be guided through the actuation handle 414 until its first section 438, what allows a smaller design of the entire actuation handle 414 respectively its first section 438 and its second section 440 as no guiding channel for the pulling member 422 has to be provided within the actuation handle 414. The first end 424 of the pulling member 422 is attached to the fastening element by a joint 428 which allows pivoting movement of the fastening element 430.

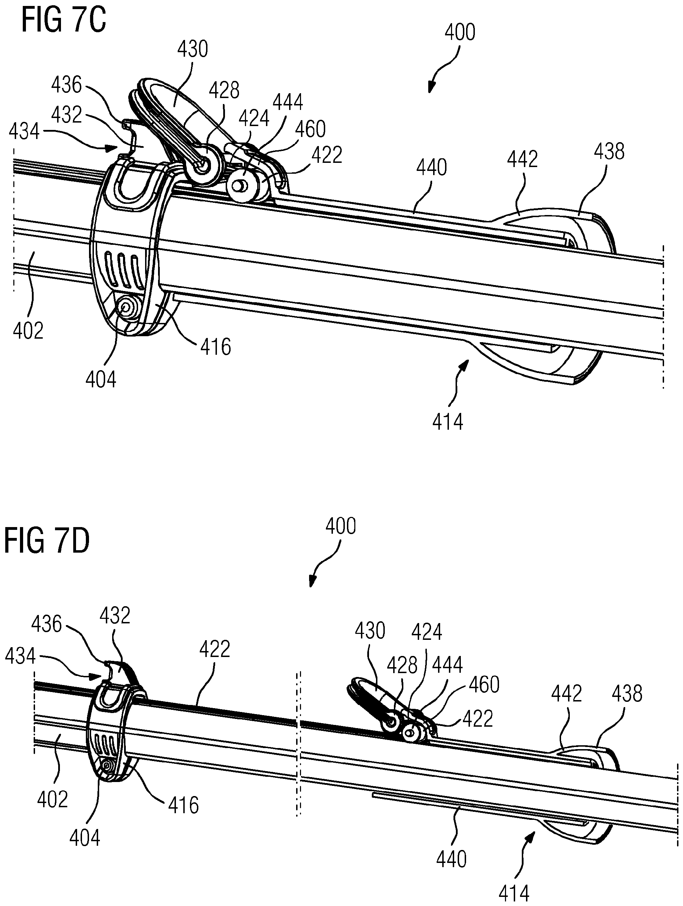

In order to carry out the first cutting action, the actuation handle 414 is constructed such that it can be moved from its first to its second position, as shown in Fig. 7B, while the fastening element 430 is fixed to the stop element 416. In order to perform the second cutting action, the fastening element 430 is detached from the stop element 416 (Fig. 7C). During a movement of the actuation handle 414 into the second position (Fig. 7D), the fastening element 430 and therefore the first end 424 of the pulling member 422 is also moved along the elongated handle 402 and away from the stop element 416 as the fastening element 430 is carried along the elongated handle 402 by the actuation handle 414. The fastening element 430 respectively the joint 428 is pulled against and fits closely with a front end of the actuation handle 414 respectively with the deflection pulley 444 during the second cutting action.

### List of reference numerals

- 100: pruning tool
- 102: elongated handle
- 104: first end portion of the handle
- 106: working device
- 108: stationary blade
- 110: movable blade
- 112: pivoting arrangement
- 113: joint area
- 114: actuation handle
- 116: stop element
- 118: second end portion of the handle
- 120: hand grip
- 122: pulling member
- 124: first end of the pulling member
- 126: drive mechanism
- 200: pruning tool
- 202: elongated handle
- 204: screw
- 214: actuation handle
- 216: stop element
- 222: pulling member
- 224: first end of the pulling member
- 228: joint
- 230: fastening element
- 232: projection
- 234: recess
- 236: projection
- 238: first section of the actuation handle
- 240: second section of the actuation handle
- 242: rounded transition area
- 244: deflection pulley
- 246: guide pulley
- 248: guiding channel
- 250: outer wall of the actuation handle
- 252: elongated projection within the actuation handle
- 300: pruning tool
- 302: elongated shaft
- 304: screw
- 314: actuation handle
- 316: stop element
- 322: pulling member
- 324: first end of the pulling member
- 330: fastening element
- 338: first section of the actuation handle
- 340: second section of the actuation handle
- 342: rounded transition area
- 344: deflection pulley
- 346: guide pulley
- 348: guiding channel
- 354: movable part of the stop element
- 356: recess
- 358: projection
- 400: pruning tool
- 402: elongated shaft
- 404: screw
- 414: actuation handle
- 416: stop element
- 422: pulling member
- 424: first end of the pulling member
- 428: joint
- 430: fastening element
- 432: projection
- 434: recess
- 436: projection
- 438: first section of the actuation handle
- 440: second section of the actuation handle
- 442: rounded transition area
- 444: deflection pulley
- 460: front section of the actuation handle
- Z₁: pulling way during the first cutting action
- Z₂: pulling way during the second cutting action
- F₁: pulling force during the first cutting action
- F₂: pulling force during the second cutting action

## Claims

1. Pruning tool (100, 200, 300, 400), in particular a branch pruner, a lopper or a secateur, comprising an elongated handle (102, 202, 302, 402), whereby a movable working device (106) is arranged at a first end portion (104) of the handle, further comprising an actuation handle (114, 214, 314, 414) being arranged on the elongated handle (102, 202, 302, 402) and being movable along the elongated handle (102, 202, 302, 402) between a first position and a second position, further comprising a stop element (116, 216, 316, 416) being fixed on the handle (102, 202, 302, 402) in order to limit the movement of the actuation handle (114, 214, 314, 414) in the direction of the working device (106), whereby the actuation handle (114, 214, 314, 414) is coupled to the working device (106) by means of a pulling member (122, 222, 322, 422) in order to transmit actuating forces on the working device (106), **characterised in that** in order to perform a first cutting action a first end (124, 224, 324, 424) of the pulling member (122, 222, 322, 422) is detachable fixable to the stop element (116, 216, 316, 416) and in order to perform a second cutting action the first end (124, 224, 324, 424) of the pulling member (122, 222, 322, 422) is detachable fixable to the actuation handle (114, 214, 314, 414).

2. Pruning tool (100, 200, 300, 400) according to claim 1, whereby the actuation handle (114, 214, 314, 414) is a movable sleeve that is configured to slide over the elongated handle (102, 202, 302, 402).

3. Pruning tool (100, 200, 300, 400) according to claim 1 or 2, whereby a hand grip (120) is arranged at a second end portion (118) of the elongated handle (102, 202, 302, 402).

4. Pruning tool (100, 200, 300, 400) according to any of the preceding claims, whereby at least one deflection pulley (244, 344, 444) is arranged within the actuation handle (114, 214, 314, 414) for deflecting the pulling member (122, 222, 322, 422)

5. Pruning tool (100, 200, 300, 400) according to any of the preceding claims, whereby at least one guide pulley (246, 346) is arranged within the actuation handle (114, 214, 314) for guiding the pulling member (122, 222, 322).

6. Pruning tool (100, 200, 300, 400) according to any of the preceding claims, whereby the first end of the pulling member (122, 222, 322, 422) is attached to a fastening element (230, 330, 430) which is detachable fixable to the stop element (116, 216, 316, 416) or the actuation handle (114, 214, 314, 414).

7. Pruning tool (100, 200, 300, 400) according to any of the preceding claims, whereby the first end (124, 224, 324, 424) of the pulling member (122, 222, 322, 422) or the fastening element (230, 330, 430) is detachable fixable to the stop element (116, 216, 316, 416) or the actuation handle (114, 214, 314, 414) by forming a form-fit connection.

8. Pruning tool (100, 200, 300, 400) according to claim 6 or 7, whereby the fastening element (230, 330, 430) is a loop or a hook that interacts with a projection (232, 432) being formed on the stop element (116, 216, 316, 416).

9. Pruning tool (100, 200, 300, 400) according to claim 8, whereby the fastening element (230, 330, 430) engages into a recess (234, 434) being formed on the projection (232, 432) .

10. Pruning tool (100, 200, 300, 400) according to any of the claims 6 to 9, whereby the fastening element (230, 330, 430) is a sleeve that is slidable along the elongated handle (102, 202, 302, 402).

11. Pruning tool (100, 200, 300, 400) according to claim 10, whereby the stop element (116, 216, 316, 416) comprises a part (354) being movable in a peripheral direction of the elongated handle (102, 202, 302) and having a recess (356) on its inner surface, whereby said recess (356) interacts with a projection (358) protruding from a peripheral surface of the fastening element (230, 330, 430) in the manner of a bayonet catch.

12. Pruning tool (100, 200, 300, 400) according to any of the preceding claims, whereby the first end (124, 224, 324, 424) of the pulling member (122, 222, 322, 422) or the fastening element (230, 330, 430) is attached to the actuation handle (114, 214, 314, 414) by means of a clamping connection, a plug connection or a form-fit connection in order to perform the second cutting action.

13. Pruning tool (100, 200, 300, 400) according to any of the preceding claims, whereby the at least one deflection pulley (244, 344, 444) and/or the at least one guide pulley (246, 346) are arranged within a first section (238, 338, 460) of the actuation handle (114, 214, 314, 414) that has a larger diameter than a second section (240, 340, 440) of the actuation handle (114, 214, 314, 414).

14. Pruning tool (100, 200, 300, 400) according to any of the preceding claims, whereby the actuation handle (114, 214, 314, 414) comprises a guiding channel (248, 348) in which the pulling member (122, 222, 322, 422) is at least partially guided.

15. Pruning tool (100, 200, 300, 400) according any of the preceding claims, whereby the elongated handle (102, 202, 302, 402) comprises at least two handle portions being telescopically movable into each other.

## Patentansprüche

1. Schneidwerkzeug (100, 200, 300, 400), insbesondere eine Astschere, ein Astschneider oder eine Gartenschere, umfassend einen länglichen Griff (102, 202, 302, 402), wobei an einem ersten Endabschnitt (104) des Griffs eine bewegliche Arbeitsvorrichtung (106) angeordnet ist, ferner umfassend einen Betätigungsgriff (114, 214, 314, 414), der an dem länglichen Griff (102,202, 302, 402) angeordnet ist und entlang des länglichen Griffs (102, 202, 302, 402) zwischen einer ersten Position und einer zweiten Position beweglich ist, ferner umfassend ein Stoppelement (116, 216, 316, 416), das an dem Griff (102, 202, 302, 402) befestigt ist, um die Bewegung des Betätigungsgriffs (114, 214, 314, 414) in Richtung der Arbeitsvorrichtung (106) zu begrenzen, wobei der Betätigungsgriff (114, 214, 314, 414) über ein Zugelement (122, 222, 322, 422) mit der Arbeitsvorrichtung (106) verbunden ist, um Betätigungskräfte auf die Arbeitsvorrichtung (106) zu übertragen, **dadurch gekennzeichnet, dass** zur Durchführung einer ersten Schneidaktion ein erstes Ende (124, 224, 324, 424) des Zugelements (122, 222, 322, 422) lösbar am Stoppelement (116, 216, 316, 416) fixierbar ist, und zur Durchführung einer zweiten Schneidaktion das erste Ende (124, 224, 324, 424) des Zugelements (122, 222, 322, 422) lösbar am Betätigungsgriff (114, 214, 314, 414) fixierbar ist.

2. Schneidwerkzeug (100, 200, 300, 400) nach Anspruch 1, wobei der Betätigungsgriff (114, 214, 314, 414) eine bewegliche Hülse ist, die so ausgebildet ist, dass sie über den verlängerten Griff (102, 202, 302, 402) verschiebbar ist.

3. Schneidwerkzeug (100, 200, 300, 400) nach Anspruch 1 oder 2, wobei ein Handgriff (120) an einem zweiten Endabschnitt (118) des länglichen Griffs (102, 202, 302, 402) angeordnet ist.

4. Schneidwerkzeug (100, 200, 300, 400) nach einem der vorhergehenden Ansprüche, wobei mindestens eine Umlenkrolle (244, 344, 444) innerhalb des Betätigungsgriffs (114, 214, 314, 414) zum Umlenken des Zugelements (122, 222, 322, 422) angeordnet ist.

5. Schneidwerkzeug (100, 200, 300, 400) nach einem der vorhergehenden Ansprüche, wobei mindestens eine Führungsrolle (246, 346) innerhalb des Betätigungsgriffs (114, 214, 314) zum Führen des Zugelements (122, 222, 322) angeordnet ist.

6. Schneidwerkzeug (100, 200, 300, 400) nach einem der vorhergehenden Ansprüche, wobei das erste Ende des Zugelements (122, 222, 322, 422) an einem Befestigungselement (230, 330, 430) befestigt ist, das lösbar am Stoppelement (116, 216, 316, 416) oder am Betätigungsgriff (114, 214, 314, 414) fixierbar ist.

7. Schneidwerkzeug (100, 200, 300, 400) nach einem der vorhergehenden Ansprüche, wobei das erste Ende (124, 224, 324, 324, 424) des Zugelements (122, 222, 322, 422) oder des Befestigungselements (230, 330, 430) lösbar am Stoppelement (116, 216, 316, 416) oder am Betätigungsgriff (114, 214, 314, 414) durch Ausbilden einer formschlüssigen Verbindung fixierbar ist.

8. Schneidwerkzeug (100, 200, 300, 400) nach Anspruch 6 oder 7, wobei das Befestigungselement (230, 330, 430) eine Schlaufe oder ein Haken ist, die/der mit einem Vorsprung (232, 432) zusammenwirkt, der an dem Stoppelement (116, 216, 316, 416) ausgebildet ist.

9. Schneidwerkzeug (100, 200, 300, 400) nach Anspruch 8, wobei das Befestigungselement (230, 330, 430) in eine Aussparung (234, 434) eingreift, die an dem Vorsprung (232, 432) ausgebildet ist.

10. Schneidwerkzeug (100, 200, 300, 400) nach einem der Ansprüche 6 bis 9, wobei das Befestigungselement (230, 330, 430) eine Hülse ist, die entlang des länglichen Griffs (102, 202, 302, 402) verschiebbar ist.

11. Schneidwerkzeug (100, 200, 300, 400) nach Anspruch 10, wobei das Stoppelement (116, 216, 316, 416) einen Teil (354) umfasst, der in Umfangsrichtung des länglichen Griffs (102, 202, 302) beweglich ist und eine Aussparung (356) an seiner Innenfläche aufweist, wobei die Aussparung (356) mit einem Vorsprung (358) zusammenwirkt, der von einer Umfangsfläche des Befestigungselements (230, 330, 430) in der Art eines Bajonettverschlusses vorsteht.

12. Schneidwerkzeug (100, 200, 300, 400) nach einem der vorhergehenden Ansprüche, wobei das erste Ende (124, 224, 324, 324, 424) des Zugelements (122, 222, 322, 422) oder des Befestigungselements (230, 330, 430) durch eine Klemmverbindung, eine Steckverbindung oder eine formschlüssige Verbindung am Betätigungsgriff (114, 214, 314, 414) zum Durchführen der zweiten Schneidaktion befestigt ist.

13. Schneidwerkzeug (100, 200, 300, 400) nach einem der vorhergehenden Ansprüche, wobei die mindestens eine Umlenkrolle (244, 344, 444) und/oder die mindestens eine Führungsrolle (246, 346) innerhalb eines ersten Abschnitts (238, 338, 460) des Betätigungsgriffs (114, 214, 314, 414) angeordnet sind, der einen größeren Durchmesser aufweist als ein zweiter Abschnitt (240, 340, 440) des Betätigungsgriffs (114, 214, 314, 414).

14. Schneidwerkzeug (100, 200, 300, 400) nach einem der vorhergehenden Ansprüche, wobei der Betätigungsgriff (114, 214, 314, 414) einen Führungskanal (248, 348) umfasst, in dem das Zugelement (122, 222, 322, 422) zumindest teilweise geführt wird.

15. Schneidwerkzeug (100, 200, 300, 400) nach einem der vorhergehenden Ansprüche, wobei der verlängerte Griff (102, 202, 302, 402) mindestens zwei Griffabschnitte umfasst, die teleskopartig ineinander verschiebbar sind.

## Revendications

1. Outil d'élagage (100, 200, 300, 400), en particulier un élagueur de branches, un ébrancheur ou un sécateur, comprenant une poignée allongée (102, 202, 302, 402), dans lequel un dispositif de travail mobile (106) est agencé au niveau d'une première partie d'extrémité (104) de la poignée, comprenant en outre une poignée d'actionnement (114, 214, 314, 414) qui est agencée sur la poignée allongée (102, 202, 302, 402) et qui est mobile le long de la poignée allongée (102, 202, 302, 402) entre une première position et une deuxième position, comprenant en outre un élément d'arrêt (116, 216, 316, 416) qui est fixé sur la poignée (102, 202, 302, 402) afin de limiter le mouvement de la poignée d'actionnement (114, 214, 314, 414) dans le sens du dispositif de travail (106), dans lequel la poignée d'actionnement (114, 214, 314, 414) est couplée au dispositif de travail (106) au moyen d'un organe de traction (122, 222, 322, 422) afin de transmettre des forces d'actionnement sur le dispositif de travail (106), **caractérisé en ce que**, afin de réaliser une première action de coupe, une première extrémité (124, 224, 324, 424) de l'organe de traction (122, 222, 322, 422) est apte à être fixée de manière détachable à l'élément d'arrêt (116, 216, 316, 416) et, afin de réaliser une deuxième action de coupe, la première extrémité (124, 224, 324, 424) de l'organe de traction (122, 222, 322, 422) est apte à être fixée de manière détachable à la poignée d'actionnement (114, 214, 314, 414).

2. Outil d'élagage (100, 200, 300, 400) selon la revendication 1, dans lequel la poignée d'actionnement (114, 214, 314, 414) est un manchon mobile qui est configuré de façon à glisser au-dessus de la poignée allongée (102, 202, 302, 402).

3. Outil d'élagage (100, 200, 300, 400) selon la revendication 1 ou 2, dans lequel un poste de préhension manuelle (120) est agencé au niveau d'une deuxième partie d'extrémité (118) de la poignée allongée (102, 202, 302, 402).

4. Outil d'élagage (100, 200, 300, 400) selon n'importe lesquelles des revendications précédentes, dans lequel au moins une poulie de déflexion (244, 344, 444) est agencée au sein de la poignée d'actionnement (114, 214, 314, 414) pour faire dévier l'organe de traction (122, 222, 322, 422).

5. Outil d'élagage (100, 200, 300, 400) selon n'importe lesquelles des revendications précédentes, dans lequel au moins une poulie de guidage (246, 346) est agencée au sein de la poignée d'actionnement (114, 214, 314) pour guider l'organe de traction (122, 222, 322).

6. Outil d'élagage (100, 200, 300, 400) selon n'importe lesquelles des revendications précédentes, dans lequel la première extrémité de l'organe de traction (122, 222, 322, 422) est attachée à un élément d'assujettissement (230, 330, 430) qui est apte à être fixé de manière détachable à l'élément d'arrêt (116, 216, 316, 416) ou à la poignée d'actionnement (114, 214, 314, 414).

7. Outil d'élagage (100, 200, 300, 400) selon n'importe lesquelles des revendications précédentes, dans lequel la première extrémité (124, 224, 324, 424) de l'organe de traction (122, 222, 322, 422) ou de l'élément d'assujettissement (230, 330, 430) est apte à être fixée de manière détachable à l'élément d'arrêt (116, 216, 316, 416) ou à la poignée d'actionnement (114, 214, 314, 414) en formant un assemblage par complémentarité.

8. Outil d'élagage (100, 200, 300, 400) selon la revendication 6 ou 7, dans lequel l'élément d'assujettissement (230, 330, 430) est une boucle ou un crochet qui agit en interaction avec une saillie (232, 432) qui est formée sur l'élément d'arrêt (116, 216, 316, 416).

9. Outil d'élagage (100, 200, 300, 400) selon la revendication 8, dans lequel l'élément d'assujettissement (230, 330, 430) s'emboîte dans un creux (234, 434) qui est formé sur la saillie (232, 432).

10. Outil d'élagage (100, 200, 300, 400) selon n'importe lesquelles des revendications 6 à 9, dans lequel l'élément d'assujettissement (230, 330, 430) est un manchon qui est apte à glisser le long de la poignée allongée (102, 202, 302, 402).

11. Outil d'élagage (100, 200, 300, 400) selon la revendication 10, dans lequel l'élément d'arrêt (116, 216, 316, 416) comprend une pièce (354) qui est mobile dans un sens périphérique de la poignée allongée (102, 202, 302) et qui possède un creux (356) sur sa surface interne, dans lequel ledit creux (356) agit en interaction avec une saillie (358) qui dépasse d'une surface périphérique de l'élément d'assujettissement (230, 330, 430) à la manière d'un cliquet à baïonnette.

12. Outil d'élagage (100, 200, 300, 400) selon n'importe lesquelles des revendications précédentes, dans lequel la première extrémité (124, 224, 324, 424) de l'organe de traction (122, 222, 322, 422) ou de l'élément d'assujettissement (230, 330, 430) est attachée à la poignée d'actionnement (114, 214, 314, 414) au moyen d'un raccordement par serrage, d'un raccordement par enfichage ou d'un assemblage par complémentarité afin de réaliser la deuxième action de coupe.

13. Outil d'élagage (100, 200, 300, 400) selon n'importe lesquelles des revendications précédentes, dans lequel l'au moins une poulie de déflexion (244, 344, 444) et/ou l'au moins une poulie de guidage (246, 346) sont agencées au sein d'une première section (238, 338, 460) de la poignée d'actionnement (114, 214, 314, 414) laquelle possède un diamètre plus grand qu'une deuxième section (240, 340, 440) de la poignée d'actionnement (114, 214, 314, 414).

14. Outil d'élagage (100, 200, 300, 400) selon n'importe lesquelles des revendications précédentes, dans lequel la poignée d'actionnement (114, 214, 314, 414) comprend un canal de guidage (248, 348) dans lequel l'organe de traction (122, 222, 322, 422) est guidé au moins partiellement.

15. Outil d'élagage (100, 200, 300, 400) selon n'importe lesquelles des revendications précédentes, dans lequel la poignée allongée (102, 202, 302, 402) comprend au moins deux parties de poignée qui sont aptes à être déplacées télescopiquement l'une dans l'autre.
